# EUROPÄISCHE PATENTSCHRIFT

(11) **EP 3 541 544 B1**
(45) Veröffentlichungstag und Bekanntmachung des Hinweises auf die Patenterteilung: **23.12.2020**
(21) Anmeldenummer: 17822113.1
(22) Anmeldetag: 17.11.2017
(51) Int. Cl.: B21D 5/00, B21D 5/02, B21D 55/00

(54) **VERFAHREN ZUM BETRIEB EINER BIEGEMASCHINE**
METHOD FOR OPERATING A BENDING MACHINE
PROCÉDÉ DE FONCTIONNEMENT D'UNE MACHINE DE CINTRAGE

(30) Priorität: 18.11.2016 AT 510502016
(43) Veröffentlichungstag der Anmeldung: 25.09.2019
(73) Patentinhaber: TRUMPF Maschinen Austria GmbH & Co. KG., 4061 Pasching (AT)
(72) Erfinder: JUNGMAYR, Thomas, 4614 Marchtrenk (AT); KUBINGER, Rudolf, 4720 Kallham (AT); MAYRHOFER, Johann, 4542 Nussbach (AT)
(74) Vertreter: Burger, Hannes
(86) Internationale Anmeldenummer: PCT/AT2017/060304
(87) Internationale Veröffentlichungsnummer: WO 2018/090069

(56) Entgegenhaltungen:
- EP-A1- 0 224 437
- EP-A1- 1 914 019
- WO-A1-2006/135961
- DE-A1-102004 020 024

## Beschreibung

Die Erfindung betrifft ein Verfahren zum Biegen eines Werkstücks entlang einer geraden Biegelinie gemäß den Merkmalen des Oberbegriffs des Anspruchs 1. Solch ein Verfahren ist z.B. in der DE 10 2004 020 024 A1 offenbart.

Aus der DE 10 2007 006 306 A1 und der DE 10 2004 020 024 A1 sind Sicherheitseinrichtungen für eine Biegemaschine und Verfahren zum Biegen von Blechteilen bekannt. Die Sicherheitseinrichtungen weisen einen Lichtsender und einen Lichtempfänger auf zwischen denen die Biegewerkzeuge angeordnet sind.

Die in der DE 10 2007 006 306 A1 und der DE 10 2004 020 024 A1 beschrieben Verfahren weisen den Nachteil auf, dass beim Biegen der Blechwerkstücke nur unzureichende Genauigkeiten erreicht werden können.

Aufgabe der vorliegenden Erfindung war es, die Nachteile des Standes der Technik zu überwinden und ein Verfahren zur Verfügung zu stellen, mittels dem Blechwerkstücke mit hoher Genauigkeit hergestellt werden können.

Diese Aufgabe wird durch ein Verfahren gemäß den Merkmalen des Anspruchs 1 gelöst.

Erfindungsgemäß ist ein Verfahren zum Biegen eines Werkstücks entlang einer geraden Biegelinie mittels einem ersten Biegewerkzeug und einem zweiten Biegewerkzeug einer Abkantpresse vorgesehen. Das Verfahren umfasst die Schritte:
- Einlegen des Werkstücks zwischen den beiden Biegewerkzeugen;
- Verschieben des ersten Biegewerkzeuges in Richtung zum zweiten Biegewerkzeug, wobei von einer Steuervorrichtung bei der Annäherungsbewegung zwischen dem ersten Biegewerkzeug und dem zweiten Biegewerkzeug der Bereich zwischen den beiden Biegewerkzeugen mittels einem Sicherheitssystem auf das Vorhandensein von Hindernissen überwacht wird, wobei das Sicherheitssystem eine an einer ersten Längsseite der Abkantpresse angeordnete Lichtquelle und ein an einer zweiten Längsseite der Abkantpresse angeordnetes optisches Erfassungsmittel aufweist, welches mit der Lichtquelle korrespondiert;
- Vorbiegen des Werkstücks auf einen Vorbiegewinkel, welcher zwischen einem ersten Biegeschenkel und einem zweiten Biegeschenkel anliegt;
- Voneinander entfernen der beiden Biegewerkzeuge, bis das Werkstück entlastet ist;
- Messen des Biegewinkels am entlasteten Werkstück und Beurteilung des Umformverhaltens des Werkstücks, insbesondere Ermittlung der Rückfederung;
- Bestimmung der Lage der Biegelinie des entlasteten und vorgebogenen Werkstücks in Relation zu einer Mittelebene des ersten und/oder des zweiten Biegewerkzeuges, wobei das Sicherheitssystem zur Bestimmung der Lage der Biegelinie verwendet wird und wobei bei Überschreiten einer festgelegten maximal zulässigen Abweichung der Position der Biegelinie von der Mittelebene mittels der Steuervorrichtung ein Steuersignal generiert wird und auf Basis des Steuersignals eine Korrektur der Lage des Werkstücks durchgeführt wird, bis die Position der Biegelinie innerhalb einer zulässigen Maximalabweichung von der Mittelebene liegt;
- Verschieben des ersten Biegewerkzeuges in Richtung zum zweiten Biegewerkzeug und dadurch Nachbiegen des Werkstücks unter Berücksichtigung des ermittelten Umformverhaltens des Werkstücks, bis ein Endbiegewinkel erreicht ist.

Von Vorteil am erfindungsgemäßen Verfahren ist, dass eine mögliche unerwünschte Positionsänderung des Werkstücks, welche während dem Entlasten des Werkstücks zum Messen des Biegewinkels auftreten kann, mittels dem Sicherheitssystem detektiert werden kann und anschließend dem Benutzer eine entsprechende Information zur Verfügung gestellt werden kann. Dadurch kann die Genauigkeit des Werkstücks verbessert werden, da das Werkstück für den weiteren Biegeschritt so positioniert werden kann, dass die Biegung innerhalb einer Toleranzgrenze an der gleichen Stelle fortgesetzt wird.

Weiters kann es zweckmäßig sein, wenn zusätzlich zur Bestimmung der Lage der Biegelinie des entlasteten und vorgebogenen Werkstücks mittels dem Sicherheitssystem die Lage der Winkelsymmetrale zwischen den Biegeschenkeln ermittelt wird und mittels der Steuervorrichtung eine Winkelabweichung der Winkelsymmetrale von der Mittelebene errechnet wird, wobei bei Überschreiten einer festgelegten maximal zulässigen Winkelabweichung der Winkelsymmetrale von der Mittelebene mittels der Steuervorrichtung ein Steuersignal generiert wird und auf Basis des Steuersignals eine Korrektur der Winkelabweichung des Werkstücks durchgeführt wird, bis die Winkelabweichung innerhalb einer zulässigen Maximalabweichung von der Mittelebene liegt. Von Vorteil ist hierbei, dass durch diese Maßnahme gewährleistet werden kann, dass das Werkstück immer symmetrisch in der Abkantpresse eingelegt ist. Darüber hinaus kann dadurch erreicht werden, dass das Werkstück nach dem Entlasten genau an der gleichen Stelle und genau unter dem gleichen Winkel wie vor dem Entlasten weiter gebogen wird.

Ferner kann vorgesehen sein, dass das Steuersignal als optisches und/oder akustisches Hinweissignal an einen Bediener der Abkantpresse ausgegeben wird. Von Vorteil ist hierbei, dass der Bediener mittels dem Steuersignal auf eine eventuelle falsche Positionierung des Werkstückes aufmerksam gemacht werden kann und somit in der Lage ist, die Lage des Werkstückes zu korrigieren.

Darüber hinaus kann vorgesehen sein, dass zusätzlich zum optischen und/oder akustischen Hinweissignal mittels einer Anzeigevorrichtung eine Darstellung der Positionsabweichung der Biegelinie und/oder der Richtungsabweichung der Winkelsymmetrale an einen Bediener der Abkantpresse ausgegeben wird. Von Vorteil ist hierbei, dass durch diese Maßnahme der Bediener nicht nur den Hinweis erhält, dass die Position des Werkstückes nicht korrekt ist, sondern dass zusätzlich auch gleich die Information mitgeliefert wird, wie das Werkstück verschoben bzw. verdreht werden muss, um dessen Position zu korrigieren.

Vorteilhaft ist auch eine Ausprägung, gemäß welcher vorgesehen sein kann, dass das Steuersignal eine Korrekturbewegung eines während des Biegevorganges das Werkstück haltenden Werkstückmanipulators auslöst. Dadurch kann das Werkstück mittels dem Werkstückmanipulator in seine richtige Position gebracht werden.

Gemäß einer Weiterbildung ist es möglich, dass das Steuersignal eine Korrekturbewegung des ersten Biegewerkzeugs oder des zweiten Biegewerkzeugs auslöst. Von Vorteil ist hierbei, dass die Biegewerkzeuge dazu benutzt werden, um eine Korrektur der Lage bzw. der Orientierung des Werkstücks durchzuführen.

Ferner kann es zweckmäßig sein, wenn der Biegewinkel des entlasteten Werkstücks mittels Tastelementen erfasst wird. Von Vorteil ist hierbei, dass Tastelemente zur Erfassung des Biegewinkels eine hohe Genauigkeit aufweisen können und darüber hinaus einfach herzustellen sind.

Darüber hinaus kann vorgesehen sein, dass der Vorbiegewinkel und/oder der Biegewinkel des entlasteten Werkstücks mittels dem Sicherheitssystem erfasst wird. Von Vorteil ist hierbei, dass durch diese Maßnahme keine zusätzlichen Messmittel zur Erfassung des Biegewinkels benötigt werden.

Weiters kann vorgesehen sein, dass der Vorgang zum Nachbiegen des Werkstücks nur dann durchgeführt werden kann, wenn die Lage der Biegelinie und/oder die Abweichung der Winkelsymmetrale von der Mittelebene innerhalb eines Toleranzbereiches liegt. Durch diese Maßnahme kann erreicht werden, dass ein Starten des weiteren Biegevorganges blockiert wird, solange das Werkstück nicht ordnungsgemäß eingelegt ist und somit die Produktion von Ausschussware vermindert wird.

Gemäß einer besonderen Ausprägung ist es möglich, dass die Lage der Biegelinie dadurch ermittelt wird, dass an die Innenseite der Biegeschenkel angelegte Tangenten ermittelt werden und im Schnittpunkt der beiden Tangenten die Biegelinie angenommen wird. Von Vorteil ist hierbei, dass durch diese Maßnahme bei verschiedenartig ausgebildeten Werkstücken und auch verschiedenen Biegewinkeln die Lage der Biegelinie zuverlässig bestimmt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Ausführungsbeispiels einer Abkantpresse;
- Fig. 2: eine Detailansicht eines Biegewerkzeuges mit Darstellung der Biegeschritte Vorbiegen und Entlasten zum Messen des Umformverhaltens des Werkstücks;
- Fig. 3: eine Detailansicht eines Biegewerkzeuges mit Darstellung des Biegeschrittes Endbiegen;
- Fig. 4: eine Detailansicht eines Biegewerkzeuges mit Darstellung eines übertrieben schief eingelegten Werkstückes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

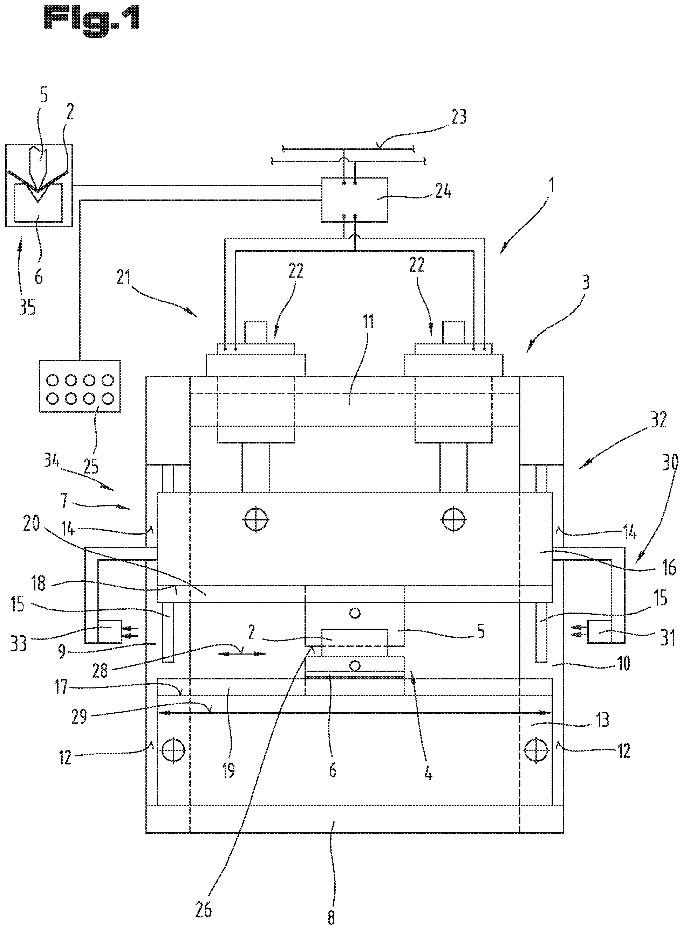

In der Fig. 1 ist eine Ausführungsvariante einer Fertigungsanlage 1 für das Freibiegen von aus Blech zu fertigenden Werkstücken 2 in einer schematisch vereinfachten Darstellung gezeigt.

Die Fertigungsanlage 1 umfasst eine Abkantpresse 3, zum Biegen der Werkstücke 2 bzw. Werkteile zwischen relativ zueinander verstellbaren Biegewerkzeugzusammenstellungen 4. Insbesondere kann vorgesehen sein, dass die Biegewerkzeugzusammenstellungen 4 zumindest ein erstes Biegewerkzeug 5 in Form eines Biegestempels und zumindest ein zweites Biegewerkzeug 6 in Form eines Biegegesenkes umfassen. Das erste Biegewerkzeug 5 kann dabei auch als Oberwerkzeug und das zweite Biegewerkzeug 6 auch als Unterwerkzeug bezeichnet werden. Weiters kann vorgesehen sein, dass die Biegewerkzeugzusammenstellung 4 mehrere erste Biegewerkzeuge 5 und mehrere zweite Biegewerkzeuge 6 aufweist.

Ein Maschinengestell 7 der Abkantpresse 3 umfasst beispielsweise eine Bodenplatte 8, auf der vertikal aufragend, zueinander in Querrichtung beabstandet und parallel zueinander ausgerichtete Seitenwangen 9, 10 angeordnet sein können. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraumes für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, Pressbalken 13 befestigt sein kann. Dieser Pressbalken 13 kann auch als Tischbalken bezeichnet werden. An von der Bodenplatte 8 entfernten Schenkeln von Frontstirnflächen 14 kann in Linearführungen 15 ein zu dem den Tischbalken bildenden Pressbalken 13 ein relativ verstellbarer weiterer Pressbalken 16, insbesondere ein Druckbalken, geführt gelagert sein.

Auf einander gegenüberliegenden, parallel zueinander verlaufenden Stirnflächen 17, 18 der beiden Pressbalken 13, 16 können Werkzeugaufnahmen 19, 20 zur Bestückung mit den Biegewerkzeuge 5, 6 angeordnet bzw. ausgebildet sein.

Die gezeigte Abkantpresse 3 weist als Antriebsanordnung 21 für den verstellbaren Pressbalken 16, nämlich den Druckbalken, zumindest ein, hier zwei Antriebsmittel 22 auf, die z.B. mit elektrischer Energie aus einem Energienetz 23 oder durch einen Hydraulikkreislauf angespeist sind und zusätzlich noch mit einer Steuervorrichtung 24 leitungsverbunden sein können. Über ein mit der Steuervorrichtung 24 leitungsverbundenes Eingabeterminal 25 wird beispielsweise der Betrieb der Abkantpresse 3 gesteuert.

Sämtliche obig genannte Ausführungsmerkmale bzw. Einzelmerkmale der Figurenbeschreibung sind genannt, um eine Exemplarische Fertigungsanlage 1 bzw. Biegepresse 3 zu beschreiben, auf die im erfindungswesentlichen, folgenden Teil der Figurenbeschreibung Bezug genommen werden kann. Sämtliche beschriebenen Einzelmerkmale sind daher für die erfindungsgemäße Ausbildung nicht zwingend erforderlich und können weggelassen, oder durch andere Merkmale ersetzt werden, um eine funktionsfähige Abkantpresse 3 zu erhalten.

Die Biegewerkzeuge 5, 6 weisen eine Biegekante 26 auf, welche sich in einer Längsrichtung des Biegewerkzeuges 5, 6 erstreckt. Die Biegekante 26 definiert auch den Verlauf der Biegelinie 27 am zu biegenden Werkstück 2. Die Biegewerkzeuge 5, 6 sind derart in der Werkzeugaufnahme 19, 20 aufgenommen, dass sie in einer zur Biegekante 26 parallelen Richtung 28 bedarfsweise verschiebbar sind. Insbesondere kann vorgesehen sein, dass die Biegewerkzeuge 4 über die gesamte Länge 29 der Werkzeugaufnahme 19, 20 verschiebbar sind.

Weiters ist ein Sicherheitssystem 30 vorgesehen, welches zur Überwachung des Biegevorganges dient. Das Sicherheitssystem 30 umfasst eine Lichtquelle 31, welche an einer ersten Längsseite 32 der Abkantpresse 3 angeordnet ist. Weiters umfasst das Sicherheitssystem 30 ein optisches Erfassungsmittel 33, welches an einer zweiten Längsseite 34 der Abkantpresse 3 angeordnet ist.

Insbesondere ist hierbei vorgesehen, dass von der Lichtquelle 31 ein Lichtstrahl emitiert wird und vom optischen Erfassungsmittel 33 aufgefangen und ausgewertet wird. Die Biegewerkzeuge 5, 6 und auch das Werkstück 2 sind zwischen der Lichtquelle 31 und dem optischen Erfassungsmittel 33 angeordnet und werfen daher am optischen Erfassungsmittel 33 einen Schatten. Somit ist am optischen Erfassungsmittel 33 eine Außenkontur der Biegewerkzeuge 5, 6 und des Werkstückes 2 erkennbar.

Darüber hinaus sind durch das optische Erfassungsmittel 33 Hindernisse, wie etwa eine Hand des Maschinenbedieners, erkennbar. Somit kann vom Sicherheitssystem 30 ein Hindernis erkannt werden, welches im herkömmlichen Biegeablauf nicht vorgesehen ist und in weiterer Folge mittels der Steuervorrichtung 24 der Biegevorgang gestoppt werden kann, um eine Beschädigung der Abkantpresse 3 bzw. eine Verletzung des Maschinenbedieners hintanzustellen.

Wie aus Fig. 1 ersichtlich kann vorgesehen sein, dass die Lichtquelle 31 und/oder das optische Erfassungsmittel 33 direkt am zweiten Pressbalken 16 angeordnet sind und somit mit diesem verfahrbar sind.

Alternativ dazu kann auch vorgesehen sein, dass die Lichtquelle 31 und/oder das optische Erfassungsmittel 33 direkt am Maschinengestell 7 angeordnet sind und somit nicht mit dem zweiten Pressbalken 16 verschoben werden, sondern ortsfest an der Abkantpresse 3 angeordnet sind.

Das Sicherheitssystem 30 kann neben seiner Funktion als Sicherheitssystem auch dazu eingesetzt werden, um eine korrekte Lage des Werkstückes 2 zu überwachen. Wenn das Werkstück 2 nicht korrekt zwischen den beiden Biegewerkzeugen 5, 6 eingelegt ist kann mittels der Steuervorrichtung 24 mit welchem das Sicherheitssystem 30 gekoppelt ist, ein Steuersignal abgegeben werden, mittels welchem die Lage bzw. Ausrichtung des Werkstückes 2 korrigiert werden kann.

Weiters kann eine Anzeigevorrichtung 35 vorgesehen sein, mittels welcher dem Maschinenbediener die aktuelle Lage des Werkstückes 2 bzw. die Soll-Lage des Werkstückes 2 angezeigt werden kann, wodurch der Maschinenbediener eine Korrektur der Lage des Werkstückes 2 durchführen kann.

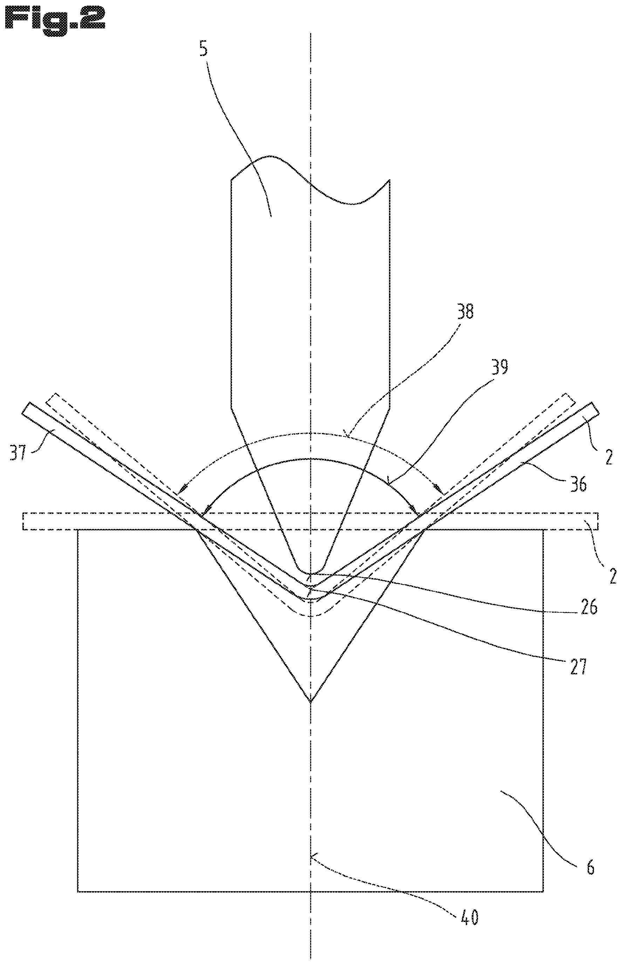

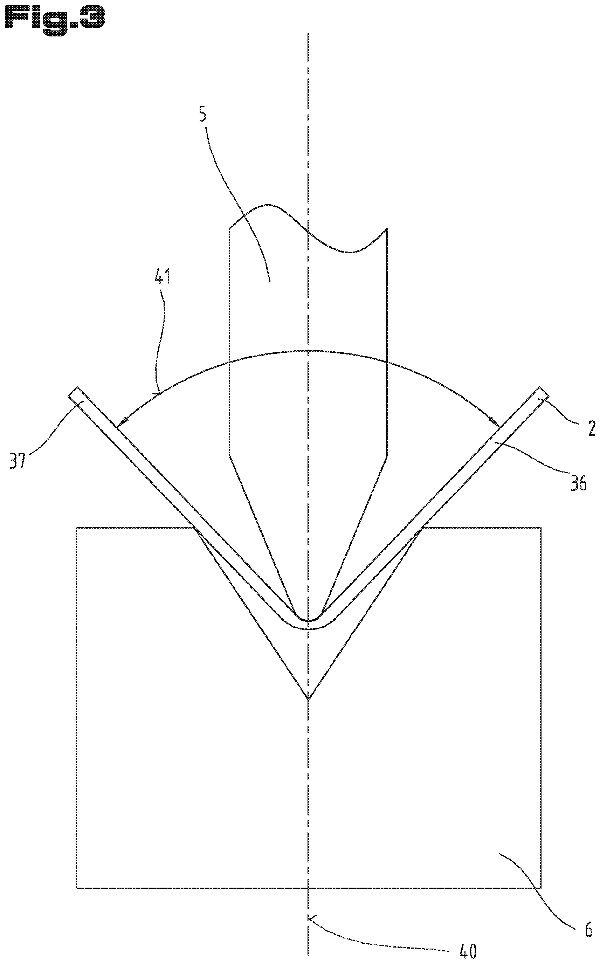

Die Figuren 2 und 3 zeigen eine Schnittdarstellung eines Ausführungsbeispiels der Biegewerkzeuge 5, 6 und des Werkstückes 2, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 sind einzelne Biegeschritte Vorbiegen des Werkstücks 2 entlang der geraden Biegelinie 27 und Entlasten des Werkstücks 2 zum Messen des Umformverhaltens des Werkstücks 2 schematisch dargestellt.

In der Fig. 3 ist der Biegeschritt des Endbiegen des Werkstücks 2 entlang der geraden Biegelinie 27 dargestellt.

Wie aus Fig. 2 ersichtlich, wird das gerade und noch ungebogene Werkstück 2 zwischen den beiden Biegewerkzeugen 5, 6 eingelegt. Insbesondere ist hierbei vorgesehen, dass das Werkstück 2 auf das zweite Biegewerkzeug 6 aufgelegt wird.

Anschließend wird das erste Biegewerkzeug 5 in Richtung zum zweiten Biegewerkzeug 6 bewegt, wobei mittels dem Sicherheitssystem 30 überwacht wird, ob sich nicht ein Gegenstand, wie etwa die Hand des Maschinenbedieners, im Gefahrenbereich zwischen dem ersten Biegewerkzeug 5 und dem zweiten Biegewerkzeug 6 befindet.

Wenn kein außerplanmäßiger Gegenstand zwischen dem ersten Biegewerkzeug 5 und dem zweiten Biegewerkzeug 6 angeordnet ist, werden diese soweit aufeinander zubewegt, bis die Biegekante 26 des ersten Biegewerkzeuges 5 am Werkstück 2 zum Anliegen kommt.

Bei der weiteren Bewegung des ersten Biegewerkzeuges 5 zum zweiten Biegewerkzeug 6 wirken die Biegewerkzeuge 5, 6 derart auf das Werkstück 2 ein, dass dieses mittels der Biegekante 26 des ersten Biegewerkzeuges 5 entlang einer Biegelinie 27 verformt wird. Am Werkstück 2 bilden sich durch den Biegevorgang ein erster Biegeschenkel 36 und ein zweiter Biegeschenkel 37, welche jeweils an die Biegelinie 27 anschließen.

Das erste Biegewerkzeug 5 wird soweit in Richtung zum zweiten Biegewerkzeug 6 bewegt, bis zwischen den beiden Biegeschenkeln 36, 37 ein vorbestimmter bzw. vorbestimmbarer Vorbiegewinkel 38 anliegt. Die Größe des Vorbiegewinkels 38 kann in einem ersten Ausführungsbeispiel mittels einem Abtastsystem wie es in der DE 296 23 800 U1 beschrieben ist, erfasst werden. Alternativ dazu ist es denkbar, dass der Vorbiegewinkel 38 mittels dem Sicherheitssystem 30 erfasst wird. In wieder einer anderen Anwendung ist es denkbar, dass der Vorbiegewinkel 38 mittels einem sonstigen System zur Biegewinkelerfassung erfasst wird.

Nach Erfassung des Vorbiegewinkels 38 wird das erste Biegewerkzeug 5 wieder vom zweiten Biegewerkzeug 6 wegbewegt, wodurch das Werkstück 2 entlastet wird. Das erste Biegewerkzeug 5 wird dabei so weit vom zweiten Biegewerkzeug 6 entfernt, bis durch die Biegewerkzeuge 5, 6 keine Kraft mehr auf das Werkstück 2 einwirkt. Durch diesen Vorgang wird ein Rückfedern des Werkstückes 2 ermöglicht, wobei das Werkstück 2 um den elastischen Biegeanteil zurückfedert. Am entlasteten Werkstück 2 wird anschließend der Biegewinkel 39 am entlasteten Werkstück 2 gemessen. Mit anderen Worten ausgedrückt wird der Biegewinkel 39 des Werkstückes 2 im unbelasteten Zustand gemessen.

Die Differenz zwischen Vorbiegewinkel 38 und Biegewinkel 39 des entlasteten Werkstücks 2 gibt Aufschluss über das Umformverhalten des Werkstücks 2. Insbesondere kann daraus der elastische Anteil der Biegung des Werkstücks 2 errechnet werden. Der elastische Anteil der Biegung des Werkstücks 2 ist neben den berechenbaren Faktoren, wie Materialeigenschaften, Blechstärke usw. auch abhängig von nicht vorherbestimmbaren Faktoren wie der Einlege- bzw. Walzrichtung des Werkstücks 2 und von Schwankungen der Bauteilfaktoren bzw. Materialeigenschaften aufgrund von Toleranzen.

In weiterer Folge wird die Lage der Biegelinie 27 des entlasteten und vorgebogenen Werkstücks in Relation zu einer Mittelebene 40 des ersten 5 und/oder des zweiten Biegewerkzeuges 6 mittels dem Sicherheitssystem 30 erfasst. Wenn die Biegelinie 27 des Werkstücks 2 bezüglich der Lage der Mittelebene 40 in einem gewissen Toleranzbereich liegt, kann der Biegevorgang fortgesetzt werden, wobei das erste Biegewerkzeug 5 wieder auf das zweite Biegewerkzeug 6 zubewegt wird und das Werkstück 2 erneut gebogen wird, bis ein Endbiegewinkel 41 erreicht wird. Der Endbiegewinkel 41 wird hierbei auf Basis des Soll-Biegewinkels und auf Basis des errechneten Umformverhaltens des Werkstücks 2 festgelegt.

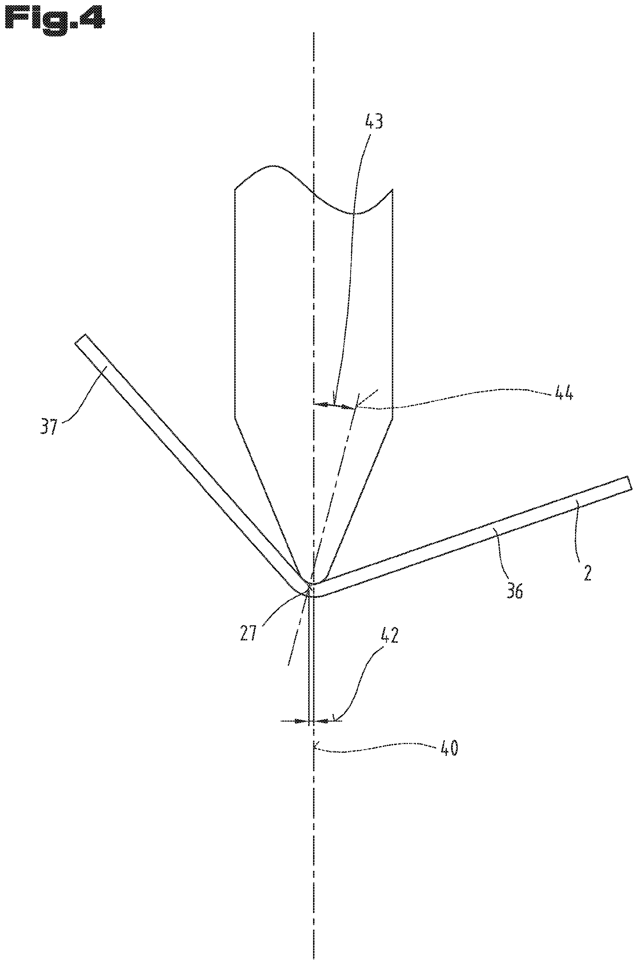

In der Fig. 4 ist eine weitere Stellung des Werkstücks 2 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann es vorkommen, dass beim Verfahrensschritt des entlasten des Werkstückes 2 zur Bestimmung dessen Biegewinkels 39, das Werkstück 2 in seiner Lage verrutscht. Dadurch kann es vorkommen, dass eine Positionsabweichung 42 der Biegelinie 27 von der Mittelebene 40 größer ist als eine maximal zulässige Abweichung. Beim Fortsetzen des Biegevorganges ohne Positionskorrektur des Werkstückes 2, würde dieses nicht sauber gebogen werden. Um dies zu verhindern, ist vorgesehen, dass mittels dem Sicherheitssystem 30 die Positionsabweichung 42 der Biegelinie 27 von der Mittelebene 40 überwacht und analysiert wird. Wenn die Positionsabweichung 42 einen Maximalwert übersteigt, wird mittels der Steuervorrichtung 24 ein Steuersignal generiert, auf Basis dessen eine Korrektur der Lage des Werkstückes 2 durchgeführt werden kann.

Zur Korrektur der Lage des Werkstücks 2 gibt es verschiedene Möglichkeiten, welche je nach Automatisierungsgrad bzw. Beschaffenheit des Werkstückes 2 unterschiedlich sind. Bei einer gering automatisierten Abkantpresse 3 kann beispielsweise vorgesehen sein, dass der Maschinenbediener das Werkstück 2 führt und das Steuersignal beispielweise ein optisches und/oder akustisches Signal ist, welches dem Maschinenbediener eine korrekte oder falsche Lage des Werkstückes 2 signalisiert. Beispielsweise kann vorgesehen sein, dass solange ein Piep-Ton oder ein optisches Signal ausgegeben wird, bis das Werkstück 2 in seine richtige Lage gebracht ist. Zur Erleichterung der Positionierung des Werkstückes 2 kann vorgesehen sein, dass die aktuelle Lage des Werkstückes 2 und die Soll-Lage des Werkstückes 2 in der Anzeigevorrichtung 35 eingeblendet werden. Durch Ablesen der Anzeigevorrichtung 35 kann dem Benutzer somit der Positioniervorgang erleichtert werden.

Weiters kann vorgesehen sein, dass das Einleiten der weiteren Biegebewegung erst durchgeführt werden kann, wenn das Werkstück 2 korrekt positioniert ist. Dadurch kann die Prozesssicherheit weiter erhöht werden und die Produktion von Ausschussware weitestgehend unterbunden werden.

Bei einem automatisierten Biegevorgang ist es beispielsweise denkbar, dass das Werkstück 2 mittels einer Manipulationsvorrichtung gehalten und geführt wird und dass das Steuersignal direkt zur Steuerung der Manipulationsvorrichtung weitergegeben wird.

In wieder einem anderen Ausführungsbeispiel ist es auch denkbar, dass zur Korrektur der Lage des Werkstücks 2, die Biegewerkzeuge 5, 6 relativ zueinander verschoben bzw. bewegt werden.

Neben der Überwachung der Lage der Biegelinie 27 kann auch vorgesehen sein, dass mittels dem Sicherheitssystem 30 eine Winkelabweichung 43 einer Winkelsymmetrale 44 des Werkstücks 2 zur Mittelebene 40 überwacht wird.

Die Winkelsymmetrale 44 ist die Symmetrale zwischen dem ersten Biegeschenkel 36 und dem zweiten Biegeschenkel 37.

Die korrekte Winkellage des Werkstückes 2 kann ebenfalls wie die korrekte Lage der Biegelinie 27 auf Basis eines Steuersignals, welches von der Steuervorrichtung 24 abgegeben wird, korrigiert werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Lichtquelle |
| 2 | Werkstück | 32 | erste Längsseite |
| 3 | Abkantpresse | 33 | optisches Erfassungsmittel |
| 4 | Biegewerkzeugzusammenstellung | 34 | zweite Längsseite |
| 5 | erstes Biegewerkzeug | 35 | Anzeigevorrichtung |
| 6 | zweites Biegewerkzeug | 36 | erster Biegeschenkel |
| 7 | Maschinengestell | 37 | zweiter Biegeschenkel |
| 8 | Bodenplatte | 38 | Vorbiegewinkel |
| 9 | Seitenwange | 39 | Biegewinkel entlastetes Werkstück |
| 10 | Seitenwange | 40 | Mittelebene |
| 11 | Querverband | 41 | Endbiegewinkel |
| 12 | Frontstirnfläche | 42 | Positionsabweichung |
| 13 | erster Pressbalken | 43 | Winkelabweichung |
| 14 | Frontstirnfläche | 44 | Winkelsymmetrale |
| 15 | Linearführung | | |
| 16 | zweiter Pressbalken | | |
| 17 | Stirnfläche | | |
| 18 | Stirnfläche | | |
| 19 | erste Werkzeugaufnahme | | |
| 20 | zweite Werkzeugaufnahme | | |
| 21 | Antriebsanordnung | | |
| 22 | Antriebsmittel | | |
| 23 | Energienetz | | |
| 24 | Steuervorrichtung | | |
| 25 | Eingabeterminal | | |
| 26 | Biegekante | | |
| 27 | Biegelinie | | |
| 28 | parallele Richtung | | |
| 29 | Länge | | |
| 30 | Sicherheitssystem | | |

## Patentansprüche

1. Verfahren zum Biegen eines Werkstücks (2) entlang einer geraden Biegelinie (27) mittels einem ersten Biegewerkzeug (5) und einem zweiten Biegewerkzeug (6) einer Abkantpresse (3), umfassend die Schritte:
- Einlegen des Werkstücks (2) zwischen den beiden Biegewerkzeugen (5, 6);
- Verschieben des ersten Biegewerkzeuges (5) in Richtung zum zweiten Biegewerkzeug (6), wobei von einer Steuervorrichtung (24) bei der Annäherungsbewegung zwischen dem ersten Biegewerkzeug (5) und dem zweiten Biegewerkzeug (6) der Bereich zwischen den beiden Biegewerkzeugen (5, 6) mittels einem Sicherheitssystem (30) auf das Vorhandensein von Hindernissen überwacht wird, wobei das Sicherheitssystem (30) eine an einer ersten Längsseite (32) der Abkantpresse (3) angeordnete Lichtquelle (31) und ein an einer zweiten Längsseite (34) der Abkantpresse angeordnetes optisches Erfassungsmittel (33) aufweist, welches mit der Lichtquelle (31) korrespondiert,
**dadurch gekennzeichnet, dass** das Verfahren weiterhin folgende Schritte umfasst:
- Vorbiegen des Werkstücks (2) auf einen Vorbiegewinkel (38), welcher zwischen einem ersten Biegeschenkel (36) und einem zweiten Biegeschenkel (37) anliegt;
- Voneinander entfernen der beiden Biegewerkzeuge (5, 6), bis das Werkstück (2) entlastet ist;
- Messen des Biegewinkels (39) am entlasteten Werkstück (2) und Beurteilung des Umformverhaltens des Werkstücks (2), insbesondere Ermittlung der Rückfederung;
- Bestimmung der Lage der Biegelinie (27) des entlasteten und vorgebogenen Werkstücks (2) in Relation zu einer Mittelebene (40) des ersten (5) und/oder des zweiten Biegewerkzeuges (6), wobei das Sicherheitssystem (30) zur Bestimmung der Lage der Biegelinie (27) verwendet wird und wobei bei Überschreiten einer festgelegten maximal zulässigen Abweichung der Position der Biegelinie (27) von der Mittelebene (40) mittels der Steuervorrichtung (24) ein Steuersignal generiert wird und auf Basis des Steuersignals eine Korrektur der Lage des Werkstücks (2) durchgeführt wird, bis die Positionsabweichung (42) der Biegelinie (27) innerhalb einer zulässigen Maximalabweichung von der Mittelebene (40) liegt;
- Verschieben des ersten Biegewerkzeuges (5) in Richtung zum zweiten Biegewerkzeug (6) und dadurch Nachbiegen des Werkstücks (2) unter Berücksichtigung des ermittelten Umformverhaltens des Werkstücks (2), bis ein Endbiegewinkel (41) erreicht ist.

2. Verfahren nach Anspruch 1, **dadurch gekennzeichnet, dass** zusätzlich zur Bestimmung der Lage der Biegelinie (27) des entlasteten und vorgebogenen Werkstücks (2) mittels dem Sicherheitssystem (30) die Lage der Winkelsymmetrale (44) zwischen den Biegeschenkeln (36, 37) ermittelt wird und mittels der Steuervorrichtung (24) eine Winkelabweichung (43) der Winkelsymmetrale (44) von der Mittelebene (40) errechnet wird, wobei bei Überschreiten einer festgelegten maximal zulässigen Winkelabweichung (43) der Winkelsymmetrale (44) von der Mittelebene (40) mittels der Steuervorrichtung (24) ein Steuersignal generiert wird und auf Basis des Steuersignals eine Korrektur der Winkelabweichung (43) des Werkstücks (2) durchgeführt wird, bis die Winkelabweichung (43) innerhalb einer zulässigen Maximalabweichung von der Mittelebene (40) liegt.

3. Verfahren nach Anspruch 1 oder 2, **dadurch gekennzeichnet, dass** das Steuersignal als optisches und/oder akustisches Hinweissignal an einen Bediener der Abkantpresse ausgegeben wird.

4. Verfahren nach einem der vorhergehenden Ansprüche, **dadurch gekennzeichnet, dass** zusätzlich zum optischen und/oder akustischen Hinweissignal mittels einer Anzeigevorrichtung (35) eine Darstellung der Positionsabweichung der Biegelinie (27) und/oder der Richtungsabweichung der Winkelsymmetrale (44) an einen Bediener der Abkantpresse (3) ausgegeben wird.

5. Verfahren nach einem der vorhergehenden Ansprüche, **dadurch gekennzeichnet, dass** das Steuersignal eine Korrekturbewegung eines während des Biegevorganges das Werkstück (2) haltenden Werkstückmanipulators auslöst.

6. Verfahren nach einem der vorhergehenden Ansprüche, **dadurch gekennzeichnet, dass** das Steuersignal eine Korrekturbewegung des ersten Biegewerkzeugs (5) oder des zweiten Biegewerkzeugs (6) auslöst.

7. Verfahren nach einem der vorhergehenden Ansprüche, **dadurch gekennzeichnet, dass** der Biegewinkel (39) des entlasteten Werkstücks (2) mittels Tastelementen erfasst wird.

8. Verfahren nach einem der vorhergehenden Ansprüche, **dadurch gekennzeichnet, dass** der Vorbiegewinkel (38) und/oder der Biegewinkel (39) des entlasteten Werkstücks (2) mittels dem Sicherheitssystem (30) erfasst wird.

9. Verfahren nach einem der vorhergehenden Ansprüche, **dadurch gekennzeichnet, dass** der Vorgang zum Nachbiegen des Werkstücks (2) nur dann durchgeführt werden kann, wenn die Lage der Biegelinie (27) und/oder die Abweichung der Winkelsymmetrale (44) von der Mittelebene (40) innerhalb eines Toleranzbereiches liegt.

10. Verfahren nach einem der vorhergehenden Ansprüche, **dadurch gekennzeichnet, dass** die Lage der Biegelinie (27) dadurch ermittelt wird, dass an die Innenseite der Biegeschenkel (36, 37) angelegte Tangenten ermittelt werden und im Schnittpunkt der beiden Tangenten die Biegelinie (27) angenommen wird.

## Claims

1. A method for bending a workpiece (2) along a straight bending line (27), by means of a first bending tool (5) and a second bending tool (6) of a press brake (3), comprising the steps:
- placement of the workpiece (2) between the two bending tools (5, 6);
- displacement of the first bending tool (5) in the direction toward the second bending tool (6), wherein, during the approach movement between the first bending tool (5) and the second bending tool (6), by a controller (24), the region between the two bending tools (5, 6) is monitored for the presence of obstacles by means of a safety system (30), wherein the safety system (30) has a light source (31) disposed on a first longitudinal side (32) of the press brake (3) and an optical detection means (33) disposed on a second longitudinal side (34) of the press brake, which optical detection means (33) corresponds with the light source (31),
**characterized in that** the method moreover comprises the following steps:
- pre-bending of the workpiece (2) to a pre-bending angle (38), which fits between a first bending limb (36) and a second bending limb (37);
- removal from one another of the two bending tools (5, 6), until the workpiece (2) is relieved of stress;
- measuring of the bending angle (39) on the stress-relieved workpiece (2) and evaluation of the deformation behavior of the workpiece (2), in particular determination of the springback;
- determination of the position of the bending line (27) of the stress-relieved and pre-bent workpiece (2) in relation to a central plane (40) of the first (5) and/or of the second bending tool (6), wherein the safety system (30) is used for the determination of the position of the bending line (27), and wherein in case an predetermined maximally permissible deviation of the position of the bending line (27) from the central plane (40) is exceeded, by means of the controller (24), a control signal is generated, and on the basis of said control signal, a correction of the position of the workpiece (2) is carried out, until the position deviation (42) of the bending line (27) lies within a permissible maximum deviation from the central plane (40);
- displacement of the first bending tool (5) in the direction toward the second bending tool (6) and thereby re-bending of the workpiece (2), taking into consideration the determined deformation behavior of the workpiece (2), until a final bending angle (41) is achieved.

2. The method according to claim 1, **characterized in that** in addition to the determination of the position of the bending line (27) of the stress-relieved and pre-bent workpiece (2) by means of the safety system (30), the position of the angle bisector (44) between the bending limbs (36, 37) is determined, and an angle deviation (43) of the angle bisector (44) from the central plane (40) is calculated by means of the controller (24), wherein if an established maximally permissible angle deviation (43) of the angle bisector (44) from the central plane (40) is exceeded, a control signal is generated by means of the controller (24), and, on the basis of the control signal, a correction of the angle deviation (43) of the workpiece (2) is carried out, until the angle deviation (43) lies within a permissible maximum deviation from the central plane (40).

3. The method according to claim 1 or 2, **characterized in that** the control signal is issued to an operator of the press brake as an optical and/or acoustic warning signal.

4. The method according to one of the preceding claims, **characterized in that** in addition to the optical and/or acoustic warning signal, a representation of the position deviation of the bending line (27) and/or of the direction deviation of the angle bisector (44) is issued to an operator of the press brake (3) by means of a display device (35).

5. The method according to one of the preceding claims, **characterized in that** the control signal triggers a correction movement of a workpiece manipulator that holds the workpiece (2) during the bending process.

6. The method according to one of the preceding claims, **characterized in that** the control signal triggers a correction movement of the first bending tool (5) or of the second bending tool (6).

7. The method according to one of the preceding claims, **characterized in that** the bending angle (39) of the stress-relieved workpiece (2) is detected by means of feeler elements.

8. The method according to one of the preceding claims, **characterized in that** the pre-bending angle (38) and/or the bending angle (39) of the stress-relieved workpiece (2) is detected by means of the safety system (30).

9. The method according to one of the preceding claims, **characterized in that** the process for re-bending of the workpiece (2) can only be carried out when the position of the bending line (27) and/or the deviation of the angle bisector (44) from the central plane (40) lies within a tolerance range.

10. The method according to one of the preceding claims, **characterized in that** the position of the bending line (27) is determined by tangents drawn against the inside of the bending limbs (36, 37) being determined, and the bending line (27) is assumed to lie at the intersection of the two tangents.

## Revendications

1. Procédé de pliage d'une pièce (2) le long d'une ligne de pliage droite (27), au moyen d'un premier outil de pliage (5) et d'un deuxième outil de pliage (6) d'une presse plieuse (3), comprenant les étapes suivantes :
- insertion de la pièce (2) entre les deux outils de pliage (5, 6) ;
- coulissement du premier outil de pliage (5) en direction du deuxième outil de pliage (6), dans lequel un dispositif de commande (24), lors du déplacement d'approche entre le premier outil de pliage (5) et le deuxième outil de pliage (6), surveille la zone entre les deux outils de pliage (5, 6) au moyen d'un système de sécurité (30), afin de détecter la présence d'obstacles, dans lequel le système de sécurité (30) comprend une source de lumière (31) disposée sur un premier côté longitudinal (32) de la presse plieuse (3) et un moyen de détection optique (33) disposé sur un deuxième côté longitudinal (34) de la presse plieuse, qui correspond à la source de lumière (31),
**caractérisé en ce que** le procédé comprend en outre les étapes suivantes :
- pré-pliage de la pièce (2) avec un angle de pré-pliage (38), qui s'appuie entre un premier bras de pliage (36) et un deuxième bras de pliage (37) ;
- éloignement entre eux des deux outils de pliage (5, 6) jusqu'à ce que la pièce (2) soit déchargée ;
- mesure de l'angle de pliage (39) sur la pièce (2) déchargée et évaluation du comportement de déformation de la pièce (2), plus particulièrement détermination de l'élasticité ;
- détermination de la position de la ligne de pliage (27) de la pièce (2) déchargée et pré-pliée par rapport à un plan central (40) du premier (5) et/ou du deuxième outil de pliage (6), dans lequel le système de sécurité (30) est utilisé pour la détermination de la position de la ligne de pliage (27) et dans lequel, lors d'un dépassement d'un écart maximal admissible déterminé de la position de la ligne de pliage (27) par rapport au plan central (40), le dispositif de commande (24) génère un signal de commande et, sur la base du signal de commande, effectue une correction de la position de la pièce (2) jusqu'à ce que l'écart de position (42) de la ligne de pliage (27) se trouve à l'intérieur d'un écart maximal admissible par rapport au plan central (40) ;
- coulissement du premier outil de pliage (5) en direction du deuxième outil de pliage (6) et repliage de la pièce (2) en tenant compte du comportement de déformation de la pièce (2) jusqu'à ce qu'un angle final de pliage (41) soit atteint.

2. Procédé selon la revendication 1, **caractérisé en ce que**, en plus de la détermination de la position de la ligne de pliage (27) de la pièce (2) déchargée et pliée, le système de sécurité (30) détermine la position de la bissectrice (44) entre les bras de pliage (36, 37) et le dispositif de commande (24) calcule un écart angulaire (43) entre la bissectrice (44) et le plan central (40), dans lequel, lors d'un dépassement d'un écart angulaire maximale admissible déterminé (43) entre la bissectrice (44) et le plan central (40), le dispositif de commande (24) génère un signal de commande et, sur la base du signal de commande, effectue une correction de l'écart angulaire (43) de la pièce (2) jusqu'à ce que l'écart angulaire (43) se trouve à l'intérieur d'un écart angulaire maximal admissible par rapport au plan central (40).

3. Procédé selon la revendication 1 ou 2, **caractérisé en ce que** le signal de commande est émis sous la forme d'un signal d'avertissement optique et/ou acoustique à l'attention d'un opérateur de la presse plieuse.

4. Procédé selon l'une des revendications précédentes, **caractérisé en ce que**, en plus du signal d'avertissement optique et/ou acoustique, un dispositif d'affichage (35) affiche une représentation de l'écart de position de la ligne de pliage (27) et/ou de l'écart de direction de la bissectrice (44) à l'attention d'un opérateur de la presse plieuse (3).

5. Procédé selon l'une des revendications précédentes, **caractérisé en ce que** le signal de commande déclenche un déplacement de correction d'un manipulateur de pièce qui maintient la pièce (2) pendant le processus de pliage.

6. Procédé selon l'une des revendications précédentes, **caractérisé en ce que** le signal de commande déclenche un déplacement de correction du premier outil de pliage (5) ou du deuxième outil de pliage (6).

7. Procédé selon l'une des revendications précédentes, **caractérisé en ce que** l'angle de pliage (39) de la pièce (2) déchargée est mesuré au moyen d'éléments palpeurs.

8. Procédé selon l'une des revendications précédentes, **caractérisé en ce que** l'angle de pré-pliage (38) et/ou l'angle de pliage (39) de la pièce (2) déchargée est mesuré à l'aide du système de sécurité (30).

9. Procédé selon l'une des revendications précédentes, **caractérisé en ce que** le processus de repliage de la pièce (2) n'est effectué que si la position de la ligne de pliage (27) et/ou l'écart entre la bissectrice (44) et le plan central (40) se trouve à l'intérieur d'une zone de tolérance.

10. Procédé selon l'une des revendications précédentes, **caractérisé en ce que** la position de la ligne de pliage (27) est déterminée grâce au fait que des tangentes appliquées aux côtés intérieurs des bras de pliage (36, 37) sont déterminées et la ligne de pliage (27) est supposée se trouver au croisement des deux tangentes.
